# NEUE EUROPÄISCHE PATENTSCHRIFT

(11) **EP 3 768 561 B2**
(45) Veröffentlichungstag und Bekanntmachung des Hinweises auf die Entscheidung über den Einspruch: **09.12.2026**
(45) Hinweis auf die Patenterteilung: 26.04.2023
(21) Anmeldenummer: 19708462.7
(22) Anmeldetag: 27.02.2019
(51) Int. Cl.: B60T 13/74, B60T 1/06

(54) **BREMSVORRICHTUNG**
BRAKE DEVICE
DISPOSITIF DE FREINAGE

(30) Priorität: 20.03.2018 DE 102018106479
(43) Veröffentlichungstag der Anmeldung: 27.01.2021
(73) Patentinhaber: KNORR-BREMSE Systeme für Nutzfahrzeuge GmbH, 80809 München (DE)
(72) Erfinder: NEMETH, Huba, 1116 Budapest (HU)
(74) Vertreter: LifeTech IP Spies & Behrndt Patentanwälte PartG mbB
(86) Internationale Anmeldenummer: PCT/EP2019/054820
(87) Internationale Veröffentlichungsnummer: WO 2019/179726

(56) Entgegenhaltungen:
- EP-A1- 1 479 644
- WO-A1-02/087914
- WO-A1-2004/058552
- DE-A1- 10 225 038
- DE-U1- 29 613 282

## Beschreibung

Die vorliegende Erfindung bezieht sich auf einen Antriebsstrang und ein Nutzfahrzeug.

In konventionellen Nutzfahrzeugen sind die Antriebsmaschinen (zum Beispiel interne Verbrennungsmotoren) nicht auf einer Antriebsachse installiert. Die An-triebskraft wird mittels einer Kardanwelle von der An-triebsmaschine zu einem Differentialgetriebe übertra-gen, wo eine Verzweigungen auf die einzelnen Radna-ben bzw. Felgen erfolgt. Außerdem werden konventio-nelle Bremsen üblicherweise in oder bei der Radnabe integriert. Dazu haben Radbremsen typischerweise ei-nen Rotor (eine Scheibe oder eine Trommel), die eine gleiche Rotationsgeschwindigkeit aufweisen wie das zu bremsende Rad.

Für elektrisch betriebene Fahrzeuge kann die Antriebsmaschine in der Antriebsachse integriert werden. Hierbei handelt es sich um eine sogenannte E-Achsen. Häufig sollen außerdem die Antriebe möglichst in oder bei der Radnabe integriert werden.

WO 02/087914 A1 offenbart eine Bremsvorrichtung für ein elektrisch betriebenes Fahrzeug mit einem Antriebsstrang, der einen elektrischen Antriebsmotor, ein Getriebe und eine Radnabe aufweist, wobei eine Fahrzeugbremse, entlang des Antriebsstranges von der Radnabe aus hinter dem Getriebe angeordnet ist.

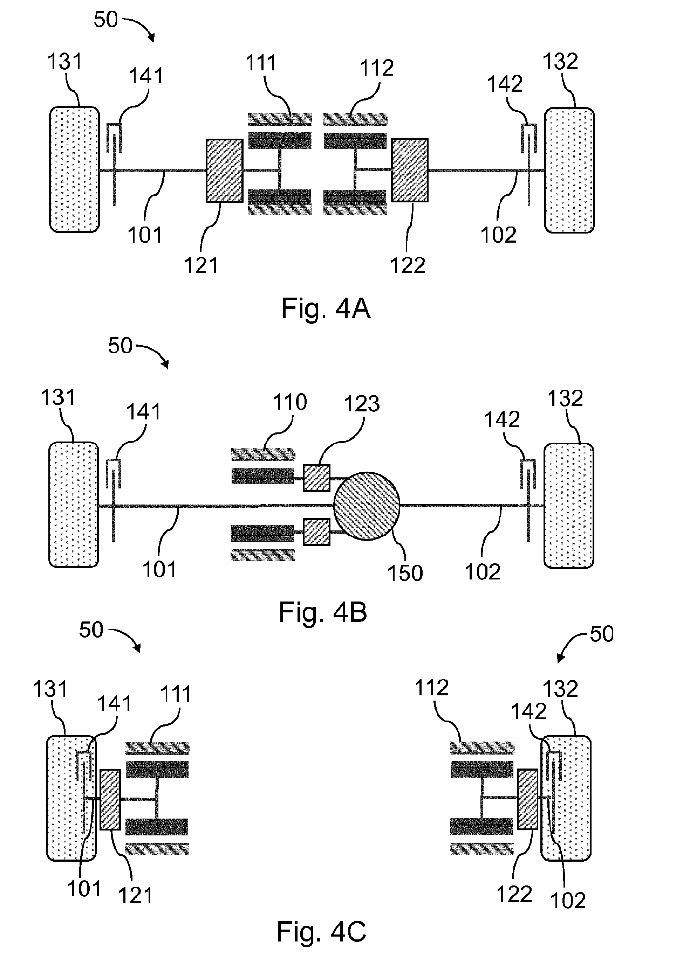

Fig. 4A bis 4C zeigen Beispiele für einen konventionellen Antriebsstrang 50, wobei an gegenüberliegenden Radnaben 131, 132 jeweils eine (Antriebs-) Achse 101, 102 koppelt. Auf jeder der Achsen 101, 102 ist jeweils eine Fahrzeugbremse 141, 142 ausgebildet, um die entsprechende Radnabe 131, 132 zu bremsen. Auf den Radnaben sind Räder zu montieren, die nicht zwingenderweise zum Antriebsstrang gerechnet werden -jedoch im Allgemeinen vorhanden sein können.

In dem Beispiel der Fig. 4A wird jede Achse 101, 102 durch einen jeweiligen Elektromotor 111, 112 angetrieben, wobei zwischen den Fahrzeugbremsen 141, 142 und dem jeweiligen Elektromotor 111, 112 jeweils ein Getriebe 121, 122 ausgebildet ist, um eine Drehmoment und eine Drehgeschwindigkeit zu transformieren.

Fig. 4B zeigt einen weiteren konventionellen Antriebsstrang 50, wobei hier ein zusätzliches Differentialgetriebe 150 entlang der Fahrzeugachsen 101, 102 zwischen den beiden Radnaben 131, 132 ausgebildet ist und an ein weiteres Getriebe 123 koppelt. Das weitere Getriebe 123 befinden sich beispielhaft hinter dem Differentialgetriebe 150, aber noch vor dem elektrische Antriebsmotor 110. Wie auch in dem Beispiel der Fig. 4A, ist in der Fig. 4B jeweils einem Fahrzeugbremse 141, 142 ausgebildet, die direkt das auf den Radnaben 131, 132 wirkende Drehmoment bremst. Die Fig. 4C zeigt ein weiteres Beispiel für einen konventionellen Antriebsstrang 50, wobei eine erste Radnaben 131 eine integrierte Bremse 141 aufweist und ein Getriebe 121 zwischen der ersten Radnabe 131 und dem die erste Radnaben 131 antreibenden elektrischen Antriebsmotor 111 angeordnet ist. Sowohl der elektrische Antriebsmotor 111 als auch das Getriebe 121 können zumindest teilweise in oder an der ersten Radnabe 131 integriert sein.

Der in der Fig. 4C dargestellte Antriebsstrang 50 kann dann auch für die gegenüberliegende, zweite Radnabe 132 in gleicher Weise (spiegelsymmetrisch) ausgebildet sein.

Da jedoch die Radbremsen 141, 142 einen beträchtlichen Umfang aufweisen können (um die wirkenden Drehmomente aufzunehmen), gibt es ein Platzproblem. Es ist häufig nicht möglich, alle Komponenten - bis hin zum elektrischen Antrieb 110, 111, 112 - auf der E-Achse nahe der Radnaben 131, 132 unterzubringen.

Daher besteht ein Bedarf nach geeigneten Lösungen, um die Fahrzeugbremse in geeigneter Weise in den sogenannten E-Achsen zu integrieren.

Zumindest ein Teil der oben genannten Probleme wird durch einen Antriebsstrang nach Anspruch 1 gelöst. Die abhängigen Ansprüche definieren weitere vorteilhafte Ausgestaltungen für die Bremsvorrichtung und des Antriebsstranges.

Die vorliegende Erfindung bezieht sich auf einen Antriebsstrang gemäß Anspruch 1.

Das Getriebe kann im Rahmen der vorliegenden Erfindung ein beliebiges Getriebe umfassen, welches ausgebildet ist, um ein Drehmoment zu übersetzen, sodass auf der einen Seite des Getriebes ein höheres Drehmoment wirkt als auf der anderen Seite. Dementsprechend gibt es auf der einen Seite des Getriebes eine Antriebswelle hoher Drehzahl und auf der anderen Seite eine Antriebswelle niedrigerer Drehzahl. Die Fahrzeugbremse koppelt gemäß Ausführungsbeispielen an die Antriebswelle hoher Drehzahl, wo gleichzeitig ein geringeres Drehmoment wirkt als direkt an der Radnabe. Wegen des geringeren Drehmomentes kann die zumindest eine Fahrzeugbremse kleiner dimensioniert werden, wodurch zumindest ein Teil der oben genannten Problem gelöst werden.

Unter eine Fahrzeugbremse soll im Rahmen der vorliegenden Erfindung auch eine Bremse verstanden werden, die nur ein Rad des Nutzfahrzeuges bremst. Es muss nicht das gesamte Fahrzeug durch die zumindest eine Fahrzeugbremse gebremst werden. Bei der Fahrzeugbremse handelt es sich um eine Reibungsbremse, die die Bremswirkung über eine mechanische Reibung bewirkt (z.B. unter Nutzung von Bremsbelägen). Jedoch soll die Art, wodurch die Reibungskraft aufgebracht wird, beliebig sein. So umfasst die Fahrzeugbremse zumindest einen der folgenden Aktuatoren: einen pneumatischen Aktuator, einen elektrischen Aktuator. Diese Aktuatoren bewirken eine Kraftwirkung und erzeugen somit die erforderliche Reibung.

Die Fahrzeugbremse ist entlang des Antriebsstranges vor dem elektrischen Antriebsmotor angeordnet.

Optional umfasst die Fahrzeugbremse eine Parkbremsfunktion. Daher kann die Bremskraft auch durch eine Feder (z.B. in einem Federspeicherzylinder) verursacht werden.

Optional umfasst die Bremsvorrichtung eine Flüssigkeitskühlung für die Fahrzeugbremse und/oder die elektrische Antriebsmaschine.

Optional ist zwischen dem elektrischen Antriebsmotor und der zumindest einen Radnabe ein Differenzialgetriebe vorhanden.

Optional sind zwei elektrische Antriebsmotoren vorhanden (der zumindest eine elektrische Antrieb ist z.B. einer davon), die ohne ein Differentialgetriebe an jeweils eine Radnabe koppeln.

Optional ist die Fahrzeugbremse zwischen dem elektrischen Antriebsmotor und der Radnabe angeordnet.

Optional ist das/die Getriebe in der/den Radnabe(n) integriert. Optional kann/können auch die Fahrzeugbremse(n) und/oder der elektrische Antriebsmotor in der/die Radnabe(n) integriert werden.

Erfindungsgemäß sind der zumindest eine elektrische Antriebsmotor, das zumindest eine Getriebe und die zumindest eine Fahrzeugbremse entlang einer Achse zwischen gegenüberliegenden Radnaben angeordnet sind. Ausführungsbeispiele umfassen somit ebenfalls eine E-Achse mit allen Komponenten.

Ausführungsbeispiele beziehen sich auch auf ein Fahrzeug, insbesondere auf ein Nutzfahrzeug, mit einem der zuvor definierten Antriebssträngen.

Zumindest ein Teil der oben genannten Probleme wird dadurch gelöst, dass sowohl der elektrische Antrieb als auch die Fahrzeugbremse an die Hochgeschwindigkeitsseite des Getriebes koppeln, während die Räder an die gegenüberliegende Seite des Getriebes koppeln. Da dadurch das auf die Bremse und die Antriebe wirkende Drehmoment-Niveau abgesenkt wird, können auf diese Weise die elektrischen Antriebe und die Fahrzeugbremsen verkleinert und somit Kosten gespart werden. Als Resultat sind alle Komponenten in kompakter Weise in eine E-Achse (einen Antriebsstrang, der entlang eine Achse ausgebildet ist) integriert.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1A-1C: zeigen Ausführungsbeispiele der vorliegenden Erfindung ohne ein Differentialgetriebe.
- Fig. 2A-2C: zeigen Ausführungsbeispiele der vorliegenden Erfindung mit einem Differentialgetriebe und zumindest zwei Getriebeeinheiten.
- Fig. 3A-3C: zeigen Ausführungsbeispiele der vorliegenden Erfindung mit einem Differentialgetriebe und einem Getriebe.

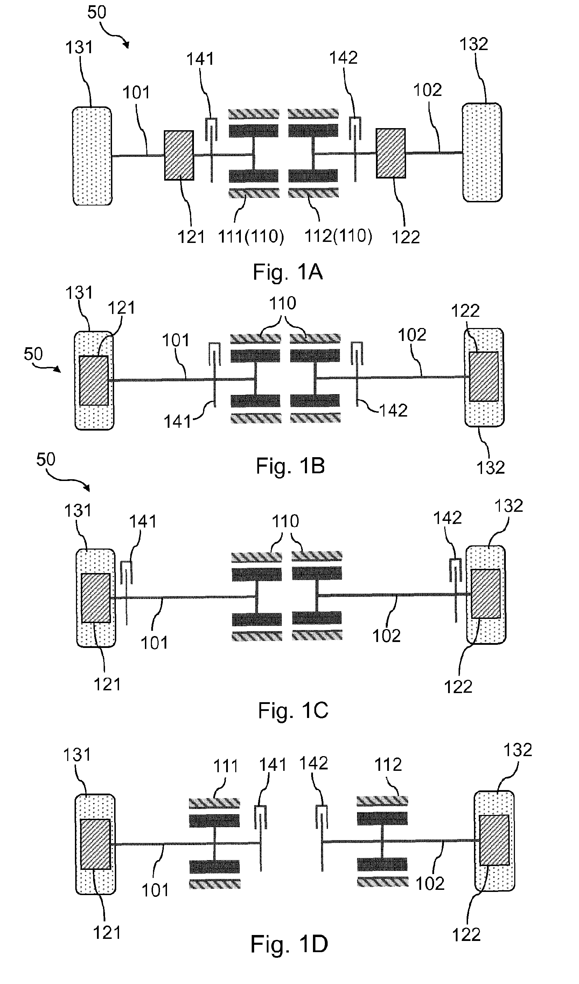

- **Fig. 1A-1D**: zeigen Ausführungsbeispiele einer Bremsvorrichtung für einen

Antriebsstrang 50 von Nutzfahrzeugen, wobei zwei elektrische Antriebe 111, 112 vorhanden sind und daher kein Differentialgetriebe benötigt wird.

Die Ortsangaben sollen sich im Folgenden immer auf den Kraftfluss entlang des Antriebsstranges beziehen und nicht notwendigerweise auf die Anbringung im Fahrzeug.

Fig. 1A zeigt einen Antriebsstrang 50 mit einer ersten Radnabe 131, ein erstes Getriebe 121, eine erste Fahrzeugbremse 141 und einen ersten Elektromotor 111. Diese Komponenten stellen einen ersten Antriebsstrang entlang einer ersten Antriebsachse 101 für ein erstes Rad dar (zum Beispiel eines der Hinterräder; nicht gezeigt in der Fig. 1A). Die erste Fahrzeugbremse 141 ist ausgebildet, um die erste Radnabe 131 zu bremsen. In dem gezeigten Ausführungsbeispiel ist die erste Fahrzeugbremse 141 zwischen dem ersten Getriebe 121 und dem ersten Elektromotor 111 angeordnet.

In gleicher Weise koppeln an eine zweiten Radnabe 132 über eine zweite Antriebsachse 102 ebenfalls ein zweites Getriebe 122, eine zweite Fahrzeugbremse 142 und ein zweiter Elektromotor 112, und zwar derart, dass zwischen dem zweiten Elektromotor 112 und dem zweiten Getriebe 122 die zweite Fahrzeugbremse 142 angeordnet ist. Die zweite Fahrzeugbremse 142 ist ausgebildet, um ein Rad des Fahrzeuges an der zweiten Radnabe 132 zu bremsen.

Wie bereits erwähnt bietet diese Anordnung den Vorteil, dass das Drehmoment an der Bremse 141, 142 kleiner ist als bei konventionellen Bremsvorrichtungen (da das Getriebe die Drehmomente übersetzt). Dort sind zwar höhere Drehzahlen vorhanden, die Fahrzeugbremsen 141, 142 können aber trotzdem kleiner dimensioniert sein, da das wirkende Drehmoment kleiner ist.

Die Fig. 1B zeigt ein weiteres Ausführungsbeispiel, bei welchem das erste Getriebe 141 in der ersten Radnabe 131 integriert bzw. in dessen Nähe angeordnet ist. Ebenso wird das zweites Getriebe 122 in die zweites Radnabe 132 integriert. Die erste Fahrzeugbremse 141 und die zweites Fahrzeugbremse 142 sind in dem gezeigten Ausführungsbeispiel immer noch räumlich in der Nähe des ersten Elektromotors 111 und des zweiten Elektromotors 112 angeordnet.

In dem Ausführungsbeispiel der Fig. 1C ist zusätzlich die erste Fahrzeugbremse 141 an oder in der ersten Radnabe 131 integriert. Ebenso ist die zweites Fahrzeugbremse 142 an oder in der zweites Radnabe 132 integriert. Zwischen dem ersten Elektromotor 111 und der ersten Radnabe 131 ist immer noch eine ersten Achse 101 ausgebildet, sodass der erste Elektromotor 111 nicht an oder in der Radnabe 131 integriert ist. Gleiches gilt für den zweiten Elektromotor 112, der von der zweites Radnabe 132 ebenfalls durch eine zweites Achse 102 beanstandet ist und nicht in oder an der zweites Radnabe 132 integriert ist.

Die Fahrzeugbremsen 141, 142 können entlang des Antriebsstranges 50 vor oder hinter den elektrischen Antriebsmotoren 111, 112 angeordnet werden. Fig. 1D zeigt eine Anordnung die nicht unter den Gegenstand der Ansprüche fällt, bei dem die Fahrzeugbremsen 141, 142 hinter den Antriebsmotoren 111, 112 angeordnet sind, sodass die Antriebsmotoren 111, 112 jeweils zwischen der jeweiligen Fahrzeugbremse 141, 142 und dem jeweiligen Getriebe 121, 122 sind. Dazu können beispielsweise die Antriebswellen 101, 102 durch die elektrischen Antriebsmotoren 111, 112 hindurchgeführt werden.

Da in diesem Ausführungsbeispiel zwei unabhängige elektrische Antriebsmotoren 111, 112 vorhanden sind, können gemäß weiterer Ausführungsbeispiele auch noch die elektrischen Antriebsmotoren 111, 112 in oder an den Radnabe 131, 132 integriert werden.

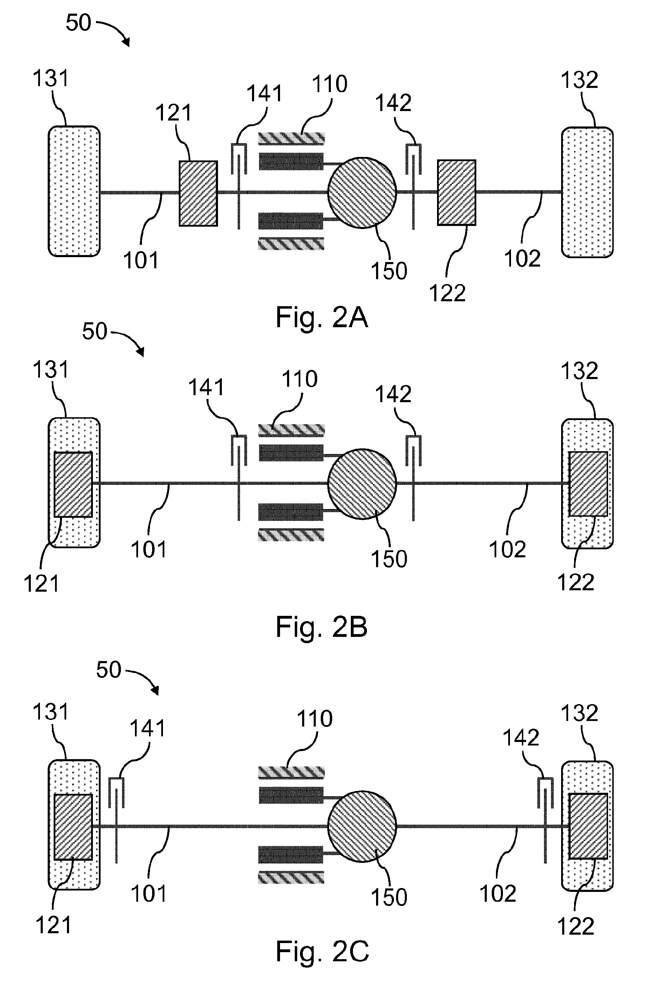

**Fig. 2A-2C** zeigen weitere Ausführungsbeispiele der vorliegenden Erfindung mit einem Differentialgetriebe 150 und zumindest zwei Getriebeeinheiten 121, 122. Das Differentialgetriebe 150 bietet den Vorteil, dass nur ein elektrische Antriebsmotor 110 vorhanden sein braucht. Das zusätzliche Differenzialgetriebe 150 ist zwischen der ersten Radnabe 131 und der zweiten Radnabe 132 ausgebildet, wobei der Elektromotor 110 hinter dem Differentialgetriebe 150 angeordnet ist (entlang des Kraftflusses von den Radnaben 131, 132 aus betrachtet).

Die Ausführungsbeispiele aus den Fig. 2A-2C umfassen wie in den Fig. 1A-1D ein erstes Getriebe 121 und ein zweites Getriebe 122, die zwischen der jeweiligen Radnabe 131, 132 und der jeweiligen Fahrzeugbremse 141 und 142 ausgebildet sind. Die erste Fahrzeugbremse 141 und die zweite Fahrzeugbremse 142 sind zwischen dem Differentialgetriebe 150 und dem jeweiligen Getriebe (dem ersten Getriebe 121 und dem zweiten Getriebe 122) angeordnet.

In den gezeigten Ausführungsbeispielen ist nur ein Elektromotor 110 ausgebildet, wobei es ebenfalls möglich ist, dass die Fahrzeugbremsen 141, 142 entlang des Antriebsstranges zwischen dem Elektromotor 110 und dem Differenzialgetriebe 150 ausgebildet werden.

Der Unterschied zwischen den Ausführungsbeispielen aus den Fig. 2A-2C betrifft wieder die verschiedenen Integrationsmöglichkeiten in den Radnaben 131, 132. In der Fig. 2A ist keines der Komponenten in der jeweiligen Radnabe 131, 132 integriert. In dem Ausführungsbeispiel der Fig. 2B ist das erste Getriebe 141 und das zweite Getriebe 122 in der jeweiligen Radnabe 131, 132 integriert. In dem Ausführungsbeispiel der Fig. 2C ist außerdem die erste Fahrzeugbremse 141 und die zweite Fahrzeugbremse 142 an oder in der ersten bzw. zweiten Radnabe 131, 132 integriert.

Die Reihenfolge der einzelnen Komponenten ist dabei gleichgeblieben, lediglich die Positionen der einzelnen Komponenten wurde näher an die Radnaben 131, 132 gesetzt. Bei dem Ausführungsbeispiel der Fig. 2C bleibt das Differentialgetriebe 150 beispielsweise in einem Abstand von der ersten Radnabe 131 und zweiten Radnabe 132 angeordnet, wobei der Abstand durch die erste und zweite Antriebswelle 101, 102 überbrückt wird.

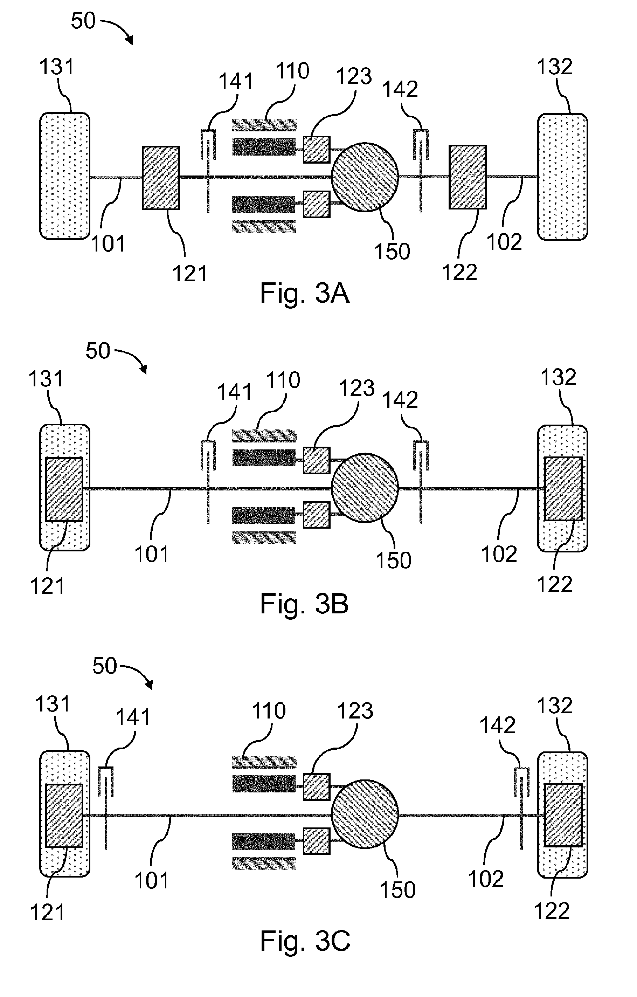

**Fig. 3A-3C** zeigen Ausführungsbeispiele der vorliegenden Erfindung mit einem Differentialgetriebe und einem zusätzlichen Getriebe. Im Unterschied zu den Ausführungsbeispielen der Fig. 2A-2C sind hier zwischen dem Differentialgetriebe 150 und dem Elektromotor 110 jeweils ein zusätzliches weiteres Getriebe 123 angeordnet. Das zusätzliche weitere Getriebe 123 kann beispielsweise ein Planetengetriebe umfassen.

Alle weiteren Komponenten sind in der gleichen Weise angeordnet, wie es in den Ausführungsbeispielen der Fig. 2A-2C gezeigt ist, sodass eine wiederholte Beschreibung nicht erforderlich ist.

In allen beschriebenen Ausführungsbeispielen können alle Komponenten entlang einer einzigen Achse ausgebildet sein, die dann eine sogenannte E-Achse darstellt. Daher kann gemäß weiterer Ausführungsbeispielen der Antriebsstrang 50 des Nutzfahrzeugs eine E-Achsen darstellen, bei dem entlang der Fahrzeugachse - von außen nach innen gesehen - zunächst die Radnaben 131, 132 angeordnet sind, daran anschließend die Getriebeeinheiten 121, 122, gefolgt von den Fahrzeugbremsen 141, 142 und den Elektromotoren 111, 112 bzw. nur ein Elektromotor 110 folgt, der von den Fahrzeugbremsen 141, 142 durch ein Differentialgetriebe 150 getrennt ist.

Bei weiteren Ausführungsbeispielen kann zumindest eine Fahrzeugbremse 141, 142 entlang des Antriebsstranges hinter der elektrischen Antriebsmaschinen 110 ausgebildet sein. So kann zum Beispiel eine Antriebswelle durch den Elektromotor 110 hindurch verlaufen und der Elektromotor 110 kann zwischen der zumindest einen Fahrzeugbremse 141, 142 und der/den Radnaben 131, 132 angeordnet sein.

Ausführungsbeispiele beziehen sich auch auf Fahrzeugbremsen für elektrisch angetriebene Achsen von Nutzfahrzeugen, wobei gemäß der vorliegenden Erfindung die Welle, die sich mit der höheren Geschwindigkeit infolge des Getriebes 131, 132 dreht, sowohl für den Antrieb als auch für die Bremse 141, 142 genutzt wird. Dadurch wird es möglich, dass nicht nur ein klein-dimensionierter elektrischer Antriebsmotor 110, 111, 112 verwendet werden kann, sondern auch die Fahrzeugbremse(n) 141, 142 verkleinert werden kann, da die bei der Bremsung aufzubringenden Drehmomente kleiner sind als wenn die Bremse direkt auf der Radnabe installiert werden würde. Ein Vorteil von Ausführungsbeispielen besteht darin, dass unter Nutzung der Hochgeschwindigkeitswelle die gleiche Bremswirkung erzielt werden kann - jedoch mit einem signifikant verringerten Bremsdrehmoment innerhalb des Bremsmechanismus. Dadurch wird eine kompaktere Fahrzeugbremse ermöglicht. Außerdem sind die Anforderungen hinsichtlich der Aktuator-Performance geringer, was insbesondere vorteilhaft für Bremsen 141, 142 ist, die durch einen elektrischen Motorbetrieb angetrieben werden.

Die konkrete Ausgestaltung der Fahrzeugbremsen 141, 142 kann frei gewählt werden. Ausführungsbeispiele der vorliegenden Erfindung sollen nicht nur auf elektrisch betriebene Fahrzeugbremsen 141, 142 (mit elektrischen Aktuatoren) eingeschränkt werden. Es ist ebenfalls möglich pneumatische Fahrzeugbremsen und hydraulische Fahrzeugbremsen einzusetzen. Die Fahrzeugbremse 141, 142 kann auch eine Parkbremsfunktion umfassen, wobei die Bremskraft beispielsweise durch eine Feder aufgebracht wird.

Da gemäß Ausführungsbeispielen die Fahrzeugbremse 141, 142 dichter an den elektrischen Antrieben 110, 111, 112 angeordnet ist, kann eine Flüssigkeitskühlung für die Fahrzeugbremse und/oder für die elektrische Antriebsmaschine vorgesehen sein. Beide können zusammen gekühlt werden.

### BEZUGSZEICHENLISTE

- 50: Antriebsstrang
- 101, 102: Antriebswellen
- 110, 111, 112: elektrische Antriebe
- 121, 122: Getriebe
- 123: weiteres Getriebe
- 131, 132: Radnaben
- 141,142: Fahrzeugbremsen
- 150: Differenzialgetriebe

## Patentansprüche

1. Antriebsstrang (50) für ein elektrisch betriebenes Nutzfahrzeug mit zumindest einem elektrischen Antriebsmotor (110, 111, 112), zumindest einem Getriebe (121, 122, 123) und zwei Radnaben (131, 132), wobei das zumindest eine Getriebe (121, 122, 123) zwischen dem zumindest einen elektrischen Antriebsmotor (110, 111, 112) und einer der zwei Radnaben (131, 132) angeordnet ist,
**gekennzeichnet durch**
eine Hochgeschwindigkeitsbremsvorrichtung mit einer Fahrzeugbremse (141, 142), die entlang des Antriebsstranges (50) von einer der zwei Radnaben (131, 132) aus hinter dem zumindest einen Getriebe und vor dem zumindest einen elektrischen Antriebsmotor (110, 111, 112) angeordnet ist und zumindest einen der folgenden Aktuatoren aufweist: einen pneumatischen Aktuator, einen elektrischen Aktuator, wobei die Fahrzeugbremse eine Reibungsbremse ist, die die Bremswirkung über eine mechanische Reibung unter Nutzung von Bremsbelägen bewirkt,
wobei der zumindest eine elektrische Antriebsmotor (110, 111, 112), das zumindest eine Getriebe (121, 122, 123) und die Fahrzeugbremse (141, 142) entlang einer Achse zwischen den gegenüberliegenden Radnaben (131, 132) angeordnet, und wobei der zumindest eine elektrische Antriebsmotor (110, 111, 112), das zumindest eine Getriebe (121, 122, 123), die zwei Radnaben (131, 132) und die Fahrzeugbremse (141, 142) in einer E-Achse integriert sind.

2. Antriebsstrang (50) nach Anspruch 1, **gekennzeichnet durch** eine Flüssigkeitskühlung für die Fahrzeugbremse (141, 142) und/oder die zumindest eine elektrische Antriebsmaschine (110, 111, 112).

3. Antriebsstrang (50) nach einem der vorhergehenden Ansprüche, **dadurch gekennzeichnet, dass** die Fahrzeugbremse (141, 142) eine Parkbremsfunktion aufweist.

4. Antriebsstrang (50) nach einem der vorhergehenden Ansprüche, **dadurch gekennzeichnet, dass** zwischen dem zumindest einen elektrischen Antriebsmotor (110) und der einen der zwei Radnaben (131, 132) ein Differentialgetriebe (150) vorhanden ist.

5. Antriebsstrang (50) nach Anspruch 4, **dadurch gekennzeichnet, dass** zwischen dem Differentialgetriebe (150) und einem elektrischen Antriebsmotor (110) ein weiteres Getriebe (123) ausgebildet ist.

6. Antriebsstrang (50) nach einem der Ansprüche 1 bis 3, **gekennzeichnet durch** zwei elektrische Antriebsmotoren (111, 112), die ohne ein Differentialgetriebe an jeweils eine Radnabe (131, 132) einer Fahrzeugachse koppeln.

7. Antriebsstrang (50) nach einem der vorhergehenden Ansprüche, **dadurch gekennzeichnet, dass** das zumindest eine Getriebe (121, 122, 123) in der einen der zwei Radnaben (131, 132) integriert ist.

8. Elektrisch betriebenes Nutzfahrzeug,
**gekennzeichnet durch**
einen Antriebsstrang (50) nach einem der vorhergehenden Ansprüche.

## Claims

1. Drive train (50) for an electrically operated utility vehicle, which has at least one electric drive motor (110, 111, 112), at least one transmission (121, 122, 123) and two wheel hubs (131, 132), wherein the at least one transmission (121, 122, 123) is arranged between the at least one electric drive motor (110, 111, 112) and at least one of the two wheel hubs (131, 132),
**characterized by**
a high-speed brake device having a vehicle brake (141, 142) which is arranged along the drive train (50) downstream of the transmission and upstream of the at least one electric drive motor (110, 111, 112), as seen from one of two wheel hubs (131, 132), and has at least one of the following actuators: a pneumatic actuator, an electric actuator,
wherein the vehicle brake is a friction brake, which causes the braking effect through a mechanical friction utilizing brake pads,
wherein the at least one electric drive motor (110, 111, 112), the at least one transmission (121, 122, 123) and the vehicle brake (141, 142) are arranged along an axle between the opposing wheel hubs (131, 132) and
wherein the at least one electric drive motor (110, 111, 112), the at least one transmission (121, 122, 123), the two brake pads (131, 132) and the vehicle brake (141, 142) are integrated into an E-axle.

2. Drive train (50) according to Claim 1, **characterized by** liquid cooling for the vehicle brake (141, 142) and/or the at least one electric drive machine (110, 111, 112).

3. Drive train (50) according to any one of the preceding claims, **characterized in that** the vehicle brake (141, 142) has a parking brake function.

4. Drive train (50) according to any one of the preceding claims, **characterized in that** there is a differential (150) between the at least one electric drive motor (110) and the one of the two wheel hubs (131, 132).

5. Drive train (50) according to Claim 4, **characterized in that** a further transmission (123) is formed between the differential (150) and an electric drive motor (110).

6. Drive train (50) according to any one of Claims 1 to 3, **characterized by** two electric drive motors (111, 112), which each couple to a wheel hub (131, 132) of a vehicle axle without a differential.

7. Drive train (50) according to any one of the preceding claims, **characterized by** the at least one transmission (121, 122, 123) is integrated into the one of two wheel hubs (131, 132).

8. Electrically operated utility vehicle,
**characterized by**
a drive train (50) according to one of the preceding claims.

## Revendications

1. Chaîne (50) d'entraînement pour un véhicule utilitaire alimenté électriquement avec au moins un moteur (110, 111, 112) d'entraînement électrique, au moins une transmission (121, 122, 123) et deux moyeux (131, 132) de roue, dans lequel la au moins une transmission (121, 122, 123) est disposée entre le au moins un moteur (110, 111, 112) d'entraînement électrique et l'un des deux moyeux (131, 132) de roue,
**caractérisée par**
un dispositif de freinage à grande vitesse avec un frein (141, 142) de véhicule qui est disposé le long de la chaîne (50) d'entraînement de l'un des deux moyeux (131, 132) de roue depuis l'arrière de la au moins une transmission et devant le au moins un moteur (110, 111, 112) d'entraînement électrique et présente au moins l'un des actionneurs suivants : un actionneur pneumatique, un actionneur électrique,
dans lequel le frein du véhicule est un frein à frottement qui entraîne l'effet de freinage via un frottement mécanique à l'aide de plaquettes de frein,
dans lequel le au moins un moteur (110, 111, 112) d'entraînement électrique, la au moins une transmission (121, 122, 123) et les freins (141, 142) du véhicule sont disposés le long d'un essieu entre les moyeux (131, 132) de roue opposés, et
dans lequel le au moins un moteur (110, 111, 112) d'entraînement électrique, la au moins une transmission (121, 122, 123), les deux moyeux (131, 132) de roue et les freins (141, 142) du véhicule sont intégrés dans un essieu E.

2. Chaîne (50) d'entraînement suivant la revendication 1, **caractérisée par** un refroidissement par du liquide des freins (141, 142) du véhicule et/ou de la au moins une machine (110, 111, 112) d'entraînement électrique.

3. Chaîne (50) d'entraînement suivant l'une quelconque des revendications précédentes, **caractérisée en ce que** le frein (141, 142) du véhicule a une fonction de frein de stationnement.

4. Chaîne (50) d'entraînement suivant l'une quelconque des revendications précédentes **caractérisée en ce qu'**une transmission (150) différentielle est présente entre le au moins un moteur (110, 111, 112) d'entraînement électrique et l'un des deux moyeux (131, 132) de roue.

5. Chaîne (50) d'entraînement suivant la revendication 4, **caractérisée en ce qu'**une autre transmission (123) est constituée entre la transmission (150) différentielle et un moteur (110) d'entraînement électrique.

6. Chaîne (50) d'entraînement suivant l'une des revendications 1 à 3, **caractérisée par** deux moteurs (111, 112) d'entraînement électriques, qui, sans une transmission différentielle, s'accouplent à un moyeu (131, 132) de roue respectif d'un essieu du véhicule.

7. Chaîne (50) d'entraînement suivant l'une quelconque des revendications précédentes, **caractérisée en ce que** la au moins une transmission (121, 122, 123) est intégrée dans l'un des deux moyeux (131, 132) de roue.

8. Véhicule utilitaire alimenté électriquement,
**caractérisé par**
une chaîne (50) d'entraînement suivant l'une quelconque des revendications précédentes.
